(19) Europäisches Patentamt / European Patent Office / Office européen des brevets

(11) **EP 4 065 824 B1**

(12) **EUROPEAN PATENT SPECIFICATION**

(45) Date of publication and mention of the grant of the patent:
**20.11.2024 Bulletin 2024/47**

(21) Application number: **20796539.3**

(22) Date of filing: **20.10.2020**

(51) International Patent Classification (IPC):
**F01N 3/035** $^{(2006.01)}$    **F01N 3/20** $^{(2006.01)}$
**F01N 9/00** $^{(2006.01)}$    **F01N 13/00** $^{(2010.01)}$

(52) Cooperative Patent Classification (CPC):
**F01N 3/208; F01N 3/035; F01N 9/005;**
**F01N 13/0093;** F01N 2900/1602; F01N 2900/1606;
F01N 2900/1616; F01N 2900/1622

(86) International application number:
**PCT/EP2020/079507**

(87) International publication number:
**WO 2021/104751 (03.06.2021 Gazette 2021/22)**

(54) **DUAL SCR SYSTEM CONTROL METHOD**

VERFAHREN ZUM STEUERN EINES DUALEN SCR-SYSTEMS

PROCÉDÉ DE COMMANDE DE SYSTÈME SCR DOUBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2019 GB 201917132**

(43) Date of publication of application:
**05.10.2022 Bulletin 2022/40**

(73) Proprietor: **PHINIA Delphi Luxembourg SARL**
**4367 Belvaux (LU)**

(72) Inventors:
• **PARMENTIER, Michael**
**6747 CHATILLON (BE)**
• **BRUGEAS, Thomas**
**54720 Cutry (FR)**

(74) Representative: **Office Freylinger**
**P.O. Box 48**
**8001 Strassen (LU)**

(56) References cited:
EP-A1- 3 150 814    EP-A1- 3 486 444
WO-A1-2013/095214    WO-A1-2019/141490
US-A1- 2011 023 463    US-A1- 2018 087 426

**Description**

TECHNICAL FIELD

This application relates to a method of controlling catalytic units operation in a vehicle exhaust system, such as those including Selective Catalytic Reduction (SCR) units where stored ammonia therein converts NOx. It has particular application to exhaust systems which comprise a first SCR unit upstream of a second SCR unit and where each SCR unit has a corresponding urea (reductant) doser unit located upstream thereof. The dosers dose urea which is converted to ammonia (NH3) for the corresponding SCR unit. It has particular application to a method of controlling the reductant (urea) dosing in the said dosers.

BACKGROUND OF THE INVENTION

Particularly in Diesel applications for CN6b and Euro 6d / Euro7 markets there will be a requirement for improved control of emissions and thus this will require more complex after treatment systems in vehicle exhausts than CN6a or Euro 6d-temp.

One typical variant consists of dual SCR catalysts (i.e. two serially located SCR units) combined with two corresponding separate urea/reductant (e.g. Adblue) dosers therefor. In the exhaust system of such system is a first SCR unit located upstream of a second (downstream) SCR unit. The second SCR unit is often referred to as an Under-Floor SCR unit (UF SCR), and the first one is often a combined Diesel particulate filter (DPF) with SCR functionality; often referred to as a SDPF. Hereinafter reference to SDPF can be interpreted as reference and interchangeable to the first (upstream) SCR unit and reference to the UF SCR can be interpreted as reference and interchangeable to the second (downstream) SCR unit

Above 450-500°C, most of the NH3 (from urea) is oxidized in the SDPF and can then not convert NOx Adding a second doser at a colder location allows NOx conversion in a second downstream SCR (e.g. UF SCR)

The addition of a second urea injection point increases the complexity of the SCRs control: the second urea doser provides an extra degree of freedom for the control. The second SCR catalyst can be fed with NH3 slipping out of the SDPF and also by direct urea injection with the second doser.

With two independent dosers, the control of two SCRs requires new open-loop and closed-loop strategies. Each SCR has to be controlled to provide a given stored amount of NH3 for NOx conversion. Expensive NOx sensors have to be kept to a minimum number. Dual doser control needs to have commonality with single doser control and there need to be an avoidance of proliferation of controls and calibration methodologies

Such dual doser control can become much more complex than single doser. In the 2019 publication "Integrated Diesel System Achieving Ultra-Low Urban and Motorway NOx Emissions on the Road" by Demuynck et al, Vienna 2019 - AECC/IAV) describes a dual doser control system. Several issues are linked with this kind of control. The Kalman filter employed breaks the link between the physical/chemical behavior of the actual system and the control, which makes it difficult for the calibrators to fine-tune the control based on physical/chemical observations. The NOx sensor located downstream of SDPF will operate with high levels of NH3 in the gas most of the time (NH3 slip from SDPF). This is due to fact that a SDPF requires high level of NH3 filling to perform at its highest possible efficiency. NOx sensors being cross-sensitive to NH3, the estimation of NH3 concentration and NOx concentration downstream of SDPF are very inaccurate. The signals will typically be less accurate than the delivery accuracy of state-of-the-art dosing systems. Moreover, NOx sensors greatly increase the total cost of an SCR system. Adding this extra sensor should be avoided if not absolutely required.

A further problem is the inaccuracy of the NH3 signal (and NOx) between SDPF and SCR, combined with the activation of the second doser makes it very risky to correct the dosing flow of the second doser (closed-loop): a drift of the front doser can wrongly be identified as a drift of the second doser, when closing the loop with the rear NOx sensor. In case of urea slip due to poor mixing / degraded front SCR, this becomes even more obvious that the second closed loop wrongly corrects the second doser.

The added complexity of the above control and its additional NOx sensor are difficult to justify because the second doser is mainly (/only) intended to be used in very high exhaust temperature conditions such as DPF regeneration. In normal conditions, it is actually detrimental to the global NOx performance of the system to control the rear SCR with the second doser instead of overfilling the front SCR to generate extra NH3: the SDPF performance greatly increases when it is saturated with NH3, which is the case when the front doser is used to control both SCR catalysts.

Documents EP 3 150 814 A1 , US 2018/087426A1, US 2011/023463A1 and EP 3 486 444 A1 disclose exhaust systems with two SCR catalyst units with doser for each unit

SUMMARY OF THE INVENTION

In one aspect is provided a method of controlling the operation of a second doser in a vehicle exhaust system, said system including a first SCR catalytic unit and a second SCR catalytic unit located downstream of said first unit, and including a first urea doser adapted to inject reductant upstream of said first unit, and where said second urea doser is located upstream of said second catalytic unit and adapted to inject urea upstream of said second catalytic unit, said method comprising the steps of

a) determining a desired NH3 slip fraction based on operating conditions of said first SCR unit,
b) controlling the operation of the second doser based on said desired slip fraction.

Said desired slip fraction may be determined from the variables of the temperature of the first SCR unit and/or the soot loading of said first SCR unit when it has DPF functionality.
According to the invention, said slip fraction is defined as a/(a+b) where "a" is the desired NH3 slip and "b" is the NH3 flow to said second SCR unit provided by operation of said second doser.
The value of "a" and/or "b" may be determined from said desired slip fraction and variables including the amount of NH3 stored on said second SCR unit and the target value for NH3 stored on said second SCR unit.
The value of "a" and or "b" may be determined from said desired slip fraction and also variables including an actual computed slip flow.
The stored NH3 of said second SCR unit may be determined from a model of the second SCR unit.
The input to the model may be the total NH3 flow to the second SCR.
The method may include controlling the operation of the first doser is dependent on the computed desired slip flow "a".
The method may include determining a value of "b" and operating the second doser dependent on this variable.
The total NH3 flow may be determined from a modeled slip flow provided by a model of said first SCR unit and a determined flow of urea from said second doser.
The method of controlling may be open-loop or feed forward.

BRIEF DESCRIPTION OF THE DRAWINGS

The present invention is now described by way of example with reference to the accompanying drawings in which:

-    Figure 1 shows an example of a dual SCR system in which embodiments of the invention can be performed;
-    Figure 2 shows how the slip fraction can be determined;
-    Figure 3 shows how the NH3 slip vs 2nd doser fraction varies with operating conditions;
-    Figure 4 shows an example of the control according to one example.

DESCRIPTION OF THE PREFERRED EMBODIMENTS

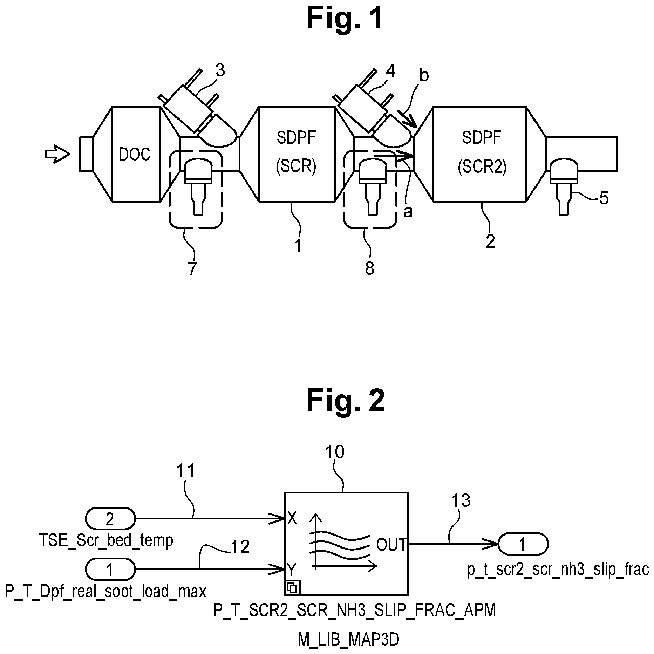

Figure 1 shows an example of a dual SCR system in which embodiments of the invention can be performed. It shows a portion of a vehicle exhaust system having dual doser/SCR after- treatment. Essentially there is a first upstream SCR (e.g. SDPF ) unit 1 and a second SCR downstream 2 therefrom. There is a first urea doser 3 adapted to dose urea/reductant upstream of the first unit and a second urea/reductant doser/injector 4 adapted to inject urea/reductant upstream of the second unit (and downstream of the first unit) and shown in figure 1, where SDPF stands for SCR on DPF. There is also located a NOx sensors 5 as shown which provides feedback control. Sensors 7 and/or 8 shown in the dotted line may not be present but are present in prior art systems. In the figure, the "a" represents the NH3 (slip) form the first catalytic unit and "b" represents the NH3 flow provided by the second urea doser. Typically a NOx sensor 7 is required to measure the NOx into the system (into the first SCR unit) and used as an input in control. Prior art system include a further NOx sensor 8 located between first and second SCR unit
In aspects of the invention there is provided an alternative control method for such dual dosers (and dual SCR) where there are two SCR units each with corresponding respective dosers.
The general feed-forward part of the control of an SCR unit/doser system is known and an example of such control is found in EP Patent Application EP2899379A1, which describes single doser (single and dual SCR) control which is therefore not described in details in this document. The following description focuses on the invention with respect to the control for dual dosers.
In essence in example of the invention, under certain circumstances, the system is controlled in wherein the NH3 filling state of the second (downstream) SCR, in other words the control of the second doser, is controlled under certain circumstances to be based on **both** the NH3 slip from the front SCR unit (SDPF) **and** the second urea doser for the second SCR unit according to a desired slip fraction.

This desired slip fraction is computed and may be based on (e.g. bed) temperature of the first catalytic unit and/or soot loading thereof when the first unit has DPF functionality.

In terms of NOx conversion efficiency, it is usually better to control NOx conversion by providing variable e.g. extra NH3 slip provided by the front SCR unit (SDPF), and not operating the second doser. However there are some conditions when the use of the rear doser is preferable. For example, this is in cases where the front SCR unit (SDPF) temperature increases above 450°C, more and more NH3 is oxidized in the front SCR (SDPF), meaning that the amount of NH3 available for the rear SCR decreases. Above a certain temperature which depends on e.g. the SDPF technology, most of the NH3 oxidizes, potentially to NOx, which is therefore counterproductive in terms of NOx after treatment. In prior art systems control generally then switches to using the second SCR/doser only

According to the invention, when reaching these high temperatures, instead of the control simply switching to determining a desired NH3 (/urea) assumed to be solely provided from the second doser, the control allows the desired/demand NH3 for the second SCR to be provided as a fraction of NH3 slip from the front SCR and NH3 from the second urea doser. The control adjust the demand for the second doser so as to provide this slip fraction, the slip fraction being dependent on operating conditions of the first.

This desired NH3 slip fraction can be a function of first SCR bed temperature and/or soot load in the first SCR when it is an SDPF. The slip fraction can be found from a look-up table or MAP based on either or both these parameters.

Figure 2 shows how the slip fraction can be determined. The inputs to a look-up table / MAP 10 are the first upstream SCR bed temperature 11 and/or the first SCR soot loading 12. The output 13 is the desired slip fraction. The desired slip fraction is defined as

$$\text{Desired NH3\_Slip\_Fraction} = a/(a+b) \qquad \text{equation 1}$$

where "a" is desired slip (the NH3 provided from slip from the first SCR) which is designated *nh3_flow_slip_dsrd,* and "b" is the NH3 provided from the second urea doser, as shown in figure 1.

The total desired NH3 flow is a + b and the values of a and/or b may be determined based on this and the determined desired slip fraction.

NH3 slip fraction also accounts for DPF soot load to enable passive DPF regeneration if the soot load is critical, allowing it to get out of critical conditions. Passive regeneration requires NOx to be present in the DPF (no SCR reaction then). An active DPF regeneration is forbidden when the filter is too heavily loaded (risks of damage).

In ideal conditions, the recommended slip fraction is 1 or 0 (i.e. exclusive use of each doser depending on temperature) but in real condition optimally, the inventor has determined that the slip fraction may be between the two, e.g. may operate or transition between 1 and 0 for optimum NOx performance and control robustness.

Methods according to the invention can still provide a very high NOx conversion efficiency at low temperatures with a 100% fraction (the desired NH3 for the rear SCR is fully provided by NH3 slip control from the SDPF) and prevent NH3 oxidation issues of high temperatures by specifying low or zero % fraction at high SDPF temperatures (e.g. with zero fraction all the desired NH3 for the rear SCR control is provided by the rear doser), but allows also for "hybrid" or "mixed" operation as described above.

In examples one criteria for switching to "mixed" control (where the slip fraction is not 0 or 1, i.e. between these values) is by using the variable of soot load in the SDPF, which allows balancing of the fraction depending on the amount of soot in the SDPF. Typically, this feature allows an earlier (colder) deactivation of the front doser to preferred/favorize passive soot oxidation in the SDPF: when NOx is converted in the first SCR unit (SDPF) by NH3, it cannot oxidize the soot. When the SDPF is critically loaded with soot, the passive oxidation of soot by NOx is highly desirable because it allows to safely reduce the soot load below critical level that allows an active DPF regen to be launched: when a DPF/SDPF is too heavily loaded, the active DPF regen is inhibited to prevent mechanical damage of the filter.

Another criteria is (bed) temperature of the first SCR unit.

In refined examples the desired extra NH3 slip (slip offset))can be limited for example to prevent excessive NH3 concentration at SDPF-out. In this case, the remainder of the limitation is provided by the second doser, in order to fulfill the total desired NH3 flow at the second SCR.

The desired extra slip may be regarded as th desired NH3 flow to be injected by first doser and slipping through SDPF to feed the second SCR catalyst. The main reason for the limitation is software: there are internal variables limited to 2000ppm, so if the NH3 slip exceeds this limit, the software erroneously models the system, so typically we calibrate such that the 2000ppm NH3 limit is not exceeded downstream of SDPF.

Example

Effectively according to examples of the invention, the system can transition from a state where all the NH3 flowing into the second catalytic unit is provided by the first SCR/doser system to a state where a portion is provided by the second doser, or vice versa, or can operate where a portion is provided by the second doser. This portion is determined, according to examples, dependent on the state of the first unit in terms of the temperature and/or the soot loading After the portion (i.e. slip fraction) is determined, the second doser is controlled dependent thereupon. So a second doser demand is made dependent on the (desired) slip fraction

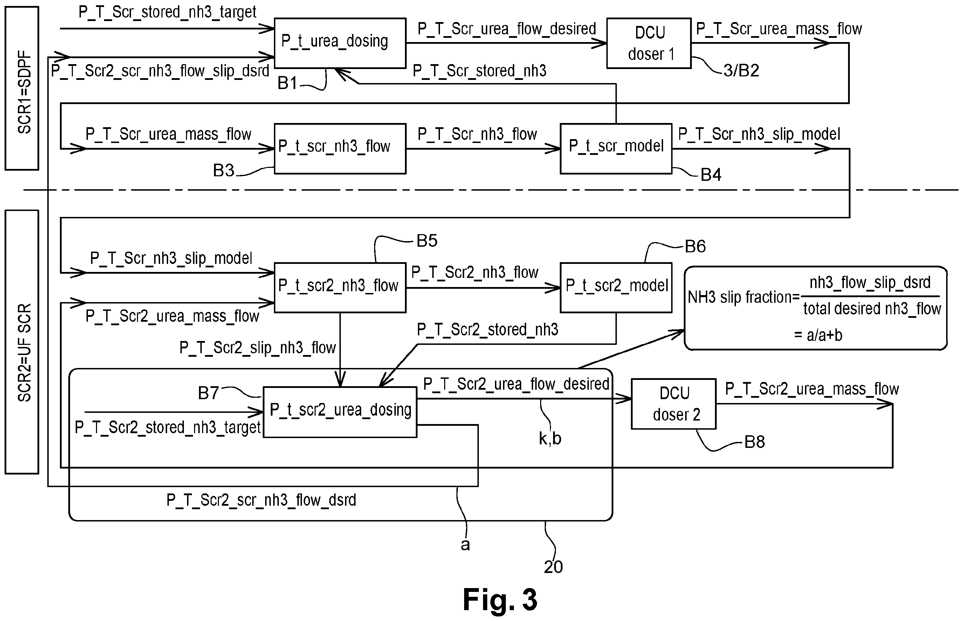

Figure 3 shows how the NH3 slip vs 2nd doser fraction varies with operating conditions. The figure shows how the NH3 slip vs 2nd doser fraction can behave. For demonstration purposes, the slip fraction has been calibrated to start to move from zero at relatively low temperature on the second doser, and still for demonstration purposes, the fraction smoothly transitions zero to 1 as control moves from providing NH3 in the second unit from SDPF NH3 slip to 2nd doser dosing.

Reference numeral 15 (green) is the SCR bed temperature (*TSE Scr_bed_temp*). Ref numeral 16 (purple) is the *P-T_Scr2_scr_nh3_flow dsrd_slip*) which is an indication extra NH3 slip demand from front SDPF (and first doser). Ref numeral 17 (red) signal is the 2nd doser mass flow (*P_T_Scr_urea_mass_flow*) .

Before time T1, the slip fraction is 0 because of high SDPF temperature. The NH3 for the second SCR is then fully provided by the 2nd doser. Reference numeral 18 (yellow) is the *P_T_Ser2 scr nh3 slip* fraction). When the SDPF temperature goes down, the slip (fraction) computed according to the methodology starts to increase, which allows both some urea flow dosing from the 2nd doser and extra NH3 slip demand from the SDPF. At time T2, the SDPF temperature is low, which makes it optimal to control the rear SCR purely by SDPF NH3 slip. The fraction then becomes 1 and the 2nd doser is shut-off.

Example

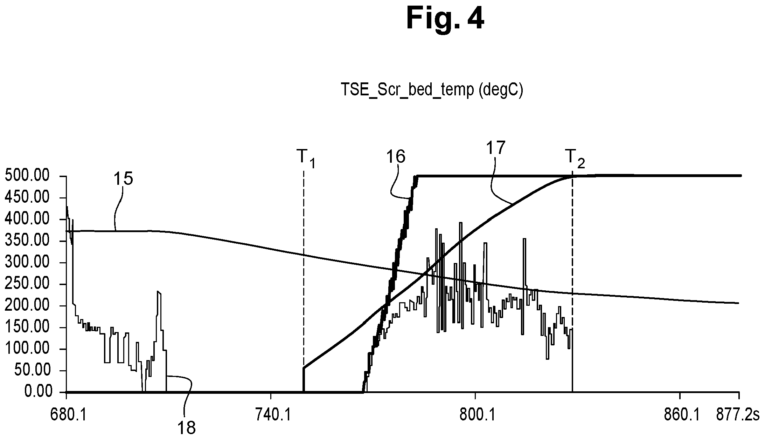

Figure 4 shows an example of the control according to one aspect. The figure generally shows inputs and outputs of models/look up tables and to and from physical components of an exhaust system such as the first (upstream doser) and second (downstream) dosers.

The figure is generally divided into two portions; the top portion shows the control of the first SCR unit (e.g. SDPF) SCR 1 and the bottom portion relates to the second SCR control (UF SCR) SCR 2.

In the top portion is shown inputs to block B1 (*p_t_urea dosing block*) . The inputs are "*P-T_SCR_stored nh3 target*", which is the target amount of urea for the first SCR. The second input is *P_T_Scr2_scr_nh3_flow_slip_dsrd* which is the desired or demand NH3 slip i.e. the NH3 going from the first to the second SCR unit. This is computed as will be described. There is also a third input which is the value of *P T SCR stored NH3* which is the stored NH3 in the first SCR unit. Block B1 is thus a P T urea dosing map/model, and the output is the desired urea flow (demand quantity ) for the first doser 3, i.e. *P_T_scr_urea flow forward desired*; in other words a demand signal for the first DCU Doser 3 shown by block B2, (equivalent to the doser upstream of the first SCR unit).

The output of the doser unit 3/block B2 is the variable *PT SCR urea mass flow* of the first doser (which may be measured or estimated ) which is fed back i.e. input to block B3 which is a MAP/table or model that determines the NH3 flow through the first SCR unit "*p_t_scr_nh$_3$_flow* " This is then input to a model B4 of the first SCR unit and the output of B4 is the *P_T_Scrnh3_slip_model* i.e. the modelled NH3 slip flowing out of the first SCR unit to the second SCR unit. The model B4 also determines the value of *P _T_SCR_stored NH3* which is the stored NH3 in the first SCR unit and this is fed into the block B1.

With regard the control of the second doser, this value *P_T_Scrnh3_slip_model*, (modelled NH3 slip flowing out of the first SCR unit to the second SCR unit), along with the variable *P_T_Scr2_urea mass flow* (which is the mass flow from the second SCR doser upstream of the second SCR unit) calculated as explained hereinafter, is input to box B5. Block B5 determines the value of *P_T Scr 2_nh3_ flow* which is total flow of NH3 to the second SCR unit and so will comprise both slip flow and the NH3 flow to the second SCR provided by the second doser. In addition Block B5 determines and outputs the value of *P TSCR2 scr slip nh3_flow* that is the actual NH3 slip flow (Actually this is the same thing but P_TScr_nh3_slip_model is the concentration [ppm] while P_T_Scr2_scr_slip_nh3_flow is the mass flow [mg/s].

Actual slip may be modelled slip because it may not be measured. In embodiments a real NH3 sensor or a virtual NH3 sensor (based on a NOx sensor) can be used to bypass the P_TScr_nh3_slip_model and in this case, P_T_Scr2_scr_slip_nh3_flow becomes a "measured"NH3 flow.

The total NH3 flow to the second unit (*P_T Scr 2_nh3_flow)* flow is then input into a model shown by block B6 and the output is the *PT_Scr2_stored nh3* which is the NH3 stored on the second SCR unit. This is input to block B7 along with the *P_T_Ser2 stored target,* which is the target value NH3 stored in the second SCR unit. In addition is a third input *P T scr2_scr_slipnh3_flow* determined from block B5 (actual slip flow).

With respect to block B7, this is where the computed desired slip fraction is computed/used.

The inputs to block 7 are the *P_T_Scr 2_scr_slip NH3 flow* which is the actual slip flow (which is modelled or measured) , *P_T Scr 2 stored NH3* and *P_T_Scr2_stred NH3 target.* The slip fraction 13 is defined a/a+b as described above and can be considered as determined here (e.g. from first SCR unit temp/soot loading) Block B7 determines values of "a" i.e. the parameter *PT_Scr_scr_nh3_flow slip_dsrd.* This is output to block B1. In addition block B7 determines a value of "b" which is the desired value of NH3 flow to the second unit from the second doser. This is used to determine a values of *_T Scr 2 urea flow desired* (that is the desired urea flow demand for the second DCU urea doser 4B7 located upstream of the second SCR unit.) This value is thus a demand input to the second doser unit doser. Typically this value is a function solely of variable "b" such as a linear function So in examples this value is k*b.

The value (a+b) is the total desired NH3 flow and may be determined (in e.g. block B7) according to operational requirements. It is to be noted that there may be more than one pair of variable of "a" and "b" which fulfil the criteria for the desired slip fraction.

In the above examples the control can be regarded as being in open loop (feed-forward control). In examples of such control, this may be defined as being no feedback in the control from the downstream NOx sensor 8 (and/or sensor 5).

A measured signal from this unit is the *P _ T Scr 2 urea mass flow* which is the dosed urea from doser 2. This variable is fed into block B5 as described.

As mentioned a further output of block B7 is the *PT_Scr_scr_nh3_flow slip_dsrd* or "a" in equation 1, which is input as mentioned to block B1. This value is equivalent to "a" in equation 1. So with reference to this value this is determined from the desired slip fraction (*p_t_scr2_scr_nh3_slip fraction* is computed as described above with reference to figure 2) .

It should be noted that any of blocks B1, B3 and B4 can be combined and considered a single model/control block. Likewise any of blocks B5, B6 B7 can be combined and considered a single block.

## Claims

1. A method of controlling the operation of a second doser (4) in a vehicle exhaust system, said system including a first SCR catalytic unit (1) and a second SCR catalytic unit (2) located downstream of said first unit (1), and including a first urea doser (3) adapted to inject reductant upstream of said first unit (1), and where said second urea doser (4) is located upstream of said second catalytic unit (2) and adapted to inject urea upstream of said second catalytic unit (2), said method comprising the steps of

   a) determining a desired NH3 slip fraction based on operating conditions of said first SCR unit,
   b) controlling the operation of the second doser (4) based on said desired slip fraction,

   wherein said slip fraction is defined as a/(a+b) where "a" is the desired NH3 slip and "b" is the NH3 flow to said second SCR unit (2) provided by operation of said second doser (4).

2. A method as claimed in claim 1 wherein desired slip fraction is determined from the variables of the temperature of the first SCR unit (1) and/or the soot loading of said first SCR unit (1) when it has DPF functionality.

3. A method as claimed in claim 1 or 2 where the value of "a" and/or "b" is determined from said desired slip fraction and variables including the amount of NH3 stored on said second SCR unit (2) and the target value for NH3 stored on said second SCR unit (2).

4. A method as claimed in claim 1 or 3 wherein the value of "a" and or "b" is determined from said desired slip fraction and also variables including an actual computed slip flow.

5. A method as claimed in claim 1 to 4 where the stored NH3 of said second SCR unit (2) is determined from a model of the second SCR unit (2).

6. A method as claimed in claims 5 wherein the input to the model is the total NH3 flow to the second SCR unit (2).

7. A method as claimed in claim 1 to 6 including controlling the operation of the first doser (3) is dependent on the computed desired slip flow "a".

8. A method as claimed in claim 1 to 7 determining a value of "b" and operating the second doser (4) dependent on this variable.

9. A method as claimed in claim 6 wherein the total NH3 flow is determined from a modeled slip flow provided by a model of said first SCR unit (1) and a determined flow of urea from said second doser (4).

10. A method as claimed in claim 1 to 9 where the method of controlling is open-loop or feed forward.

**Patentansprüche**

1. Verfahren zur Steuerung des Betriebs einer zweiten Dosiereinrichtung (4) in einem Fahrzeugabgassystem, wobei das System eine erste SCR-Katalysatoreinheit (1) und eine zweite SCR-Katalysatoreinheit (2) umfasst, die stromabwärts der ersten Einheit (1) angeordnet sind, und eine erste Harnstoff-Dosiereinrichtung (3) umfasst, die so beschaffen ist, dass sie stromaufwärts der ersten Einheit (1) Reduktionsmittel einspritzt, und wobei die zweite Harnstoff-Dosiereinrichtung (4) stromaufwärts der zweiten Katalysatoreinheit (2) angeordnet und so beschaffen ist, dass sie stromaufwärts der zweiten Katalysatoreinheit (2) Harnstoff einspritzt, wobei das Verfahren die folgenden Schritte umfasst:

   a) Bestimmen eines gewünschten NH3-Schlupfanteils auf der Grundlage der Betriebsbedingungen der ersten SCR-Einheit,
   b) Steuern des Betriebs der zweiten Dosiereinrichtung (4) auf der Grundlage des gewünschten Schlupfanteils, wobei der Schlupfanteil als a/(a+b) definiert ist, wobei "a" der gewünschte NH3-Schlupf und "b" die NH3-Strömung zu der zweiten SCR-Einheit (2) ist, die durch den Betrieb der zweiten Dosiereinrichtung (4) bereitgestellt wird.

2. Verfahren nach Anspruch 1, wobei der gewünschte Schlupfanteil aus den Variablen der Temperatur der ersten SCR-Einheit (1) und/oder der Rußbeladung der ersten SCR-Einheit (1) bestimmt wird, wenn sie DPF-Funktionalität hat.

3. Verfahren nach Anspruch 1 oder 2, wobei der Wert von "a" und/oder "b" aus dem gewünschten Schlupfanteil und aus Variablen einschließlich der in der zweiten SCR-Einheit (2) vorgehaltenen NH3-Menge und des Zielwerts für in der zweiten SCR-Einheit (2) vorgehaltenes NH3 bestimmt wird.

4. Verfahren nach Anspruch 1 oder 3, wobei der Wert von "a" und/oder "b" aus dem gewünschten Schlupfanteil und auch aus Variablen einschließlich einer tatsächlich berechneten Schlupfströmung bestimmt wird.

5. Verfahren nach einem der Ansprüche 1 bis 4, wobei das vorgehaltene NH3 der zweiten SCR-Einheit (2) aus einem Modell der zweiten SCR-Einheit (2) bestimmt wird.

6. Verfahren nach Anspruch 5, wobei die Eingabe in das Modell die gesamte NH3-Strömung zu der zweiten SCR-Einheit (2) ist.

7. Verfahren nach einem der Ansprüche 1 bis 6, wobei die Steuerung des Betriebs der ersten Dosiereinrichtung (3) von der berechneten gewünschten Schlupfströmung "a" abhängig ist.

8. Verfahren nach einem der Ansprüche 1 bis 7, wobei ein Wert von "b" bestimmt und die zweite Dosiereinrichtung (4) in Abhängigkeit von dieser Variablen betrieben wird.

9. Verfahren nach Anspruch 6, wobei die gesamte NH3-Strömung aus einer modellierten Schlupfströmung, die von einem Modell der ersten SCR-Einheit (1) bereitgestellt wird, und einer bestimmten Harnstoffströmung aus der zweiten Dosiereinrichtung (4) bestimmt wird.

10. Verfahren nach einem der Ansprüche 1 bis 9, wobei das Verfahren der Steuerung eine offene Schleife oder eine Vorwärtsregelung ist.

**Revendications**

1. Procédé de commande du fonctionnement d'un second doseur (4) dans un système d'échappement de véhicule, ledit système incluant une première unité catalytique SCR (1) et une seconde unité catalytique SCR (2) localisée en aval de ladite première unité catalytique (1), et incluant un premier doseur d'urée (3) adapté pour injecter un agent de réduction en amont de ladite première unité catalytique (1), et dans lequel ledit second doseur d'urée (4) est localisé en amont de ladite seconde unité catalytique (2) et est adapté pour injecter de l'urée en amont de ladite seconde unité catalytique (2), ledit procédé comprenant les étapes suivantes :

a) la détermination d'une fraction de fuite de NH3 souhaitée sur la base de conditions de fonctionnement de ladite première unité SCR ; et
b) la commande du fonctionnement du second doseur (4) sur la base de ladite fraction de fuite souhaitée,

dans lequel ladite fraction de fuite est définie en tant que a/(a + b) où "a" est la fuite de NH3 souhaitée et "b" est l'écoulement de NH3 sur ladite seconde unité SCR (2) assuré par le fonctionnement dudit second doseur (4).

2. Procédé tel que revendiqué selon la revendication 1, dans lequel la fraction de fuite souhaitée est déterminée à partir des variables que sont la température de la première unité SCR (1) et/ou la charge en particules de suie de ladite première unité SCR (1) lorsqu'elle présente une fonctionnalité DPF.

3. Procédé tel que revendiqué selon la revendication 1 ou 2, dans lequel la valeur de "a" et/ou la valeur de "b" sont/est déterminée(s) à partir de ladite fraction de fuite souhaitée et de variables incluant la quantité de NH3 stocké sur ladite seconde unité SCR (2) et la valeur cible pour le NH3 stocké sur ladite seconde unité SCR (2).

4. Procédé tel que revendiqué selon la revendication 1 ou 3, dans lequel la valeur de "a" et/ou la valeur de "b" sont/est déterminée(s) à partir de ladite fraction de fuite souhaitée et également de variables incluant un écoulement de fuite calculé réel.

5. Procédé tel que revendiqué selon les revendications 1 à 4, dans lequel le NH3 stocké de ladite seconde unité SCR (2) est déterminé à partir d'un modèle de la seconde unité SCR (2).

6. Procédé tel que revendiqué selon la revendication 5, dans lequel l'entrée sur le modèle est l'écoulement de NH3 total sur la seconde unité SCR (2).

7. Procédé tel que revendiqué selon les revendications 1 à 6, incluant la commande du fonctionnement du premier doseur (3) en fonction de l'écoulement de fuite souhaité calculé "a".

8. Procédé tel que revendiqué selon les revendications 1 à 7, comprenant la détermination d'une valeur de "b" et le fonctionnement du second doseur (4) en fonction de cette variable.

9. Procédé tel que revendiqué selon la revendication 6, dans lequel l'écoulement de NH3 total est déterminé à partir d'un écoulement de fuite modélisé fourni par un modèle de ladite première unité SCR (1) et d'un écoulement déterminé d'urée en provenance dudit second doseur (4).

10. Procédé tel que revendiqué selon les revendications 1 à 9, dans lequel le procédé de commande est en boucle fermée ou à action directe.

# Fig. 1

# Fig. 2

EP 4 065 824 B1

**Fig. 3**

# Fig. 4

TSE_Scr_bed_temp (degC)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3150814 A1
- US 2018087426 A1
- US 2011023463 A1
- EP 3486444 A1
- EP 2899379 A1

**Non-patent literature cited in the description**

- **DEMUYNCK et al.** *Integrated Diesel System Achieving Ultra-Low Urban and Motorway NOx Emissions on the Road,* 2019